# EUROPEAN PATENT SPECIFICATION

(11) **EP 3 292 544 B1**
(45) Date of publication and mention of the grant of the patent: **02.09.2020**
(21) Application number: 16790214.7
(22) Date of filing: 06.05.2016
(51) Int. Cl.: G08B 13/189, G08B 13/19, G08B 13/194, H04N 5/225, H04N 5/77, H04N 7/18

(54) **WIRELESS AUDIO/VIDEO RECORDING AND COMMUNICATION DOORBELLS WITH INTEGRATED IMAGE SENSOR/BUTTON**
DRAHTLOSE TÜRKLINGEL ZUR AUDIO/VIDEO-AUFNAHME UND KOMMUNIKATION MIT INTEGRIERTEM BILDSENSOR/TASTER
SONNETTES À ENREGISTREMENT ET COMMUNICATION AUDIO/VIDÉO SANS FIL COMPORTANT UN CAPTEUR D'IMAGE/UN BOUTON INTÉGRÉS

(30) Priority: 07.05.2015 US 201562158035 P
(43) Date of publication of application: 14.03.2018
(73) Proprietor: Ring Inc., Santa Monica, CA 90404 (US); Siminoff, James, Pacific Palisades, CA 90272 (US)
(72) Inventor: SIMINOFF, James, Pacific Palisades, CA 90272 (US)
(74) Representative: EIP
(86) International application number: PCT/US2016/031371
(87) International publication number: WO 2016/179570

(56) References cited:
- WO-A1-01/29795
- US-A- 4 524 384
- US-A1- 2015 022 620
- US-A1- 2015 096 876
- US-A1- 2015 109 128
- US-B1- 6 912 299
- US-B1- 6 912 299
- US-B1- 8 780 201

## Description

### RELATED APPLICATIONS

This application claims priority to U.S. Application No. 15/148,981, filed May 6, 2016 and claims benefit of U.S. Provisional Application Serial No. 62/158,035, filed on May 7, 2015.

### Technical Field

The present embodiments relate to wireless audio/video recording and communication doorbells.

### Background

Home safety is a concern for many homeowners and renters. Those seeking to protect or monitor their homes often wish to have video and audio communications with visitors, for example, those visiting an external door or entryway. Audio/Video (A/V) doorbell systems provide this functionality, and can also aid in crime detection and prevention. For example, audio and/or video captured by an A/V doorbell unit can be uploaded to the cloud and recorded on a remote server. Subsequent review of the A/V footage can aid law enforcement in capturing perpetrators of home burglaries and other crimes. Further, the presence of an A/V doorbell unit at the entrance to a home acts as a powerful deterrent against would-be burglars. US pat. app. pub. no. US 2015/096876 A1 relates to a hazard detector. US pat. app. pub. no. US 2015/109128 A1 relates to systems and methods for providing home security/smart home objectives. US pat. no. US 6912299 B1 relates to a doorkeeper apparatus with a built in device for detecting a fingerprint. International pat. app. pub. no. WO 01/29795 A1 relates to an integrated security system with a fingerprint imaging doorbell. US pat. app. pub. no. US 2015/022620 A1 relates to a wireless entrance communication device.

### SUMMARY

The various embodiments of the present wireless audio/video recording and communication doorbells with integrated image sensor/button have several features, no single one of which is solely responsible for their desirable attributes. Without limiting the scope of the present embodiments as expressed by the claims that follow, their more prominent features now will be discussed briefly. After considering this discussion, and particularly after reading the section entitled "Detailed Description," one will understand how the features of the present embodiments provide the advantages described herein.

One aspect of the present embodiments includes the realization that it may be advantageous to locate an image sensor or camera of a wireless audio/video recording and communication doorbell behind, and/or integrate the image sensor or camera into, the doorbell button (e.g. the button used to actuate the doorbell's audible tone). Locating the image sensor or camera behind the button, and/or integrating the image sensor or camera into the button, may conserve space within the doorbell, thereby enabling the size of the outer envelope of the doorbell to be reduced, which in turn may give the doorbell a more streamlined and visually pleasing appearance. In some embodiments in which the image sensor or the camera is integrated into the doorbell button, the image sensor or the camera may comprise the doorbell button, e.g. the image sensor or the camera may be configured such that the visitor presses the image sensor or the camera in order to actuate the doorbell's audible tone.

In a first aspect, an audio/video recording and communication doorbell is provided, the doorbell comprising a housing, a button for actuating the doorbell, the button being located at a front of the housing and being configured to move between a first, static position and a second, depressed position, a video camera located directly behind the button, the video camera being configured for capturing a set of video images to be streamed to a client device, and for detection of infrared (IR) light, wherein the button comprises an optically transparent or translucent material such that ambient light may pass through the button to reach the video camera behind the button, and IR light-emitting components for activation in low level ambient light, the IR light-emitting components located behind the button.

In an embodiment of the first aspect, the housing includes an aperture that exposes the button.

In another embodiment of the first aspect, the button protrudes from the housing through the aperture.

In another embodiment of the first aspect, actuating the doorbell comprises sounding an audible tone and/or initiating recording of audio and/or video and/or transmitting audio and/or video.

In another embodiment of the first aspect, the image sensor is located concentrically with the button.

In another embodiment of the first aspect, the image sensor comprises a video recording sensor or a camera chip.

Another embodiment of the first aspect further comprises infrared (IR) light-emitting components configured to enable the image sensor to clearly capture images under conditions of low ambient light.

In another embodiment of the first aspect, the IR light-emitting components are located behind or within the button.

In a second aspect, an audio/video recording and communication doorbell is provided, the doorbell comprising a housing, and a camera located at a front of the housing and being configured to move between a first, static position and a second, depressed position in order to actuate the doorbell. The claims relate to the first aspect. The second aspect is provided as a comparative example.

In an embodiment of the second aspect, the housing includes an aperture that exposes the camera.

In another embodiment of the second aspect, the camera protrudes from the housing through the aperture.

In another embodiment of the second aspect, actuating the doorbell comprises sounding an audible tone and/or initiating recording of audio and/or video and/or transmitting audio and/or video.

In another embodiment of the second aspect, the camera comprises an image sensor.

In another embodiment of the second aspect, the image sensor comprises a video recording sensor or a camera chip.

Another embodiment of the second aspect further comprises infrared light- emitting components configured to enable the camera to clearly capture images under conditions of low ambient light.

In another embodiment of the second aspect, the camera comprises a camera printed circuit board (PCB).

In another embodiment of the second aspect, the camera PCB is configured to move with the camera between the first, static position and the second, depressed position.

Another embodiment of the second aspect further comprises tracking bosses, wherein the camera PCB includes through-holes that receive the tracking bosses to maintain alignment of the camera PCB as the camera PCB moves with the camera between the first, static position and the second, depressed position.

### BRIEF DESCRIPTION OF THE DRAWINGS

The various embodiments of the present wireless audio/video recording and communication doorbells with integrated image sensor/button now will be discussed in detail with an emphasis on highlighting the advantageous features. These embodiments depict the novel and non-obvious wireless audio/video recording and communication doorbells with integrated image sensor/button shown in the accompanying drawings, which are for illustrative purposes only. These drawings include the following figures, in which like numerals indicate like parts:
Figure 1 is a functional block diagram illustrating a system for streaming and storing audio/video (A/V) content captured by a wireless A/V recording and communication device according to the present embodiments;
Figure 2 is a front view of a wireless A/V recording and communication doorbell according to an aspect of the present disclosure;
Figure 3 is a rear view of the wireless A/V recording and communication doorbell of Figure 2;
Figure 4 is a left side view of the wireless A/V recording and communication doorbell of Figure 2 attached to a mounting bracket according to an aspect of the present disclosure;
Figure 5 is cross-sectional right side view of the wireless A/V recording and communication doorbell of Figure 2;
Figure 6 is an exploded view of the wireless A/V recording and communication doorbell and the mounting bracket of Figure 4;
Figure 7 is a rear view of the mounting bracket of Figure 4;
Figures 8A and 8B are top and bottom views, respectively, of the wireless A/V recording and communication doorbell and the mounting bracket of Figure 4;
Figures 9A and 9B are top and front views, respectively, of a passive infrared sensor holder of the wireless A/V recording and communication doorbell of Figure 2;
Figures 10A and 10B are top and front views, respectively, of a passive infrared sensor holder assembly of the wireless A/V recording and communication doorbell of Figure 2;
Figure 11 is a top view of the passive infrared sensor assembly of Figure 10A and a field of view thereof according to an aspect of the present disclosure;
Figure 12 a functional block diagram of the components of the wireless A/V recording and communication doorbell of Figure 2;
Figure 13 is a flowchart illustrating a process for a wireless A/V recording and communication doorbell according to an aspect of the present disclosure;
Figure 14 is a flowchart illustrating another process for a wireless A/V recording and communication doorbell according to an aspect of the present disclosure;
Figure 15 is a flowchart illustrating another process for a wireless A/V recording and communication doorbell according to an aspect of the present disclosure;
Figure 16 is a front view of an embodiment of a wireless A/V recording and communication doorbell according to an aspect of the present disclosure;
Figure 17 is a front perspective view of the wireless A/V recording and communication doorbell of Figure 16;
Figures 18 and 19 are cross-sectional right side views of the wireless A/V recording and communication doorbell of Figure 16, taken along the section line A-A in Figure 16;
Figures 20 and 21 are cross-sectional right side views of an example not belonging to the present invention of the wireless A/V recording and communication doorbell of Figure 16, taken along the section line A-A in Figure 16;
Figure 22 is a functional block diagram of a client device on which the present embodiments may be implemented according to various aspects of the present disclosure; and
Figure 23 is a functional block diagram of a general-purpose computing system on which the present embodiments may be implemented according to various aspects of present disclosure.

### DETAILED DESCRIPTION

The following detailed description describes the present embodiments with reference to the drawings. In the drawings, reference numbers label elements of the present embodiments. These reference numbers are reproduced below in connection with the discussion of the corresponding drawing features.

The embodiments of the present wireless audio/video recording and communication doorbells with integrated image sensor/button are described below with reference to the figures. These figures, and their written descriptions, indicate that certain components of the apparatus are formed integrally, and certain other components are formed as separate pieces. Those of ordinary skill in the art will appreciate that components shown and described herein as being formed integrally may in alternative embodiments be formed as separate pieces. Those of ordinary skill in the art will further appreciate that components shown and described herein as being formed as separate pieces may in alternative embodiments be formed integrally. Further, as used herein the term integral describes a single unitary piece.

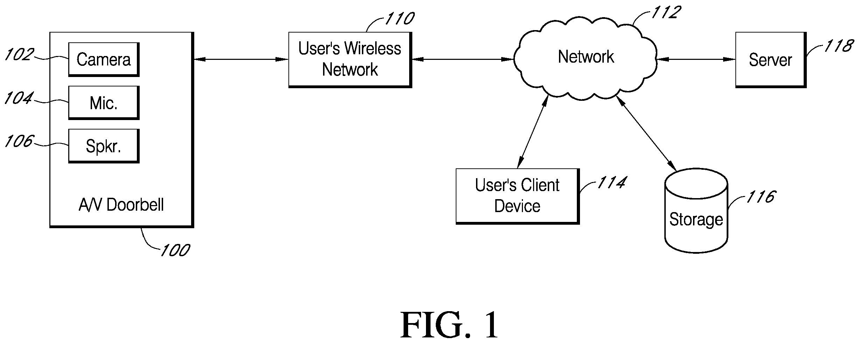

With reference to Figure 1, the present embodiments include an audio/video (A/V) recording and communication doorbell. The A/V recording and communication doorbell 100 is typically located near the entrance to a structure (not shown), such as a dwelling, a business, a storage facility, etc. The A/V recording and communication doorbell 100 includes a camera 102, a microphone 104, and a speaker 106. The camera 102 may comprise, for example, a high definition (HD) video camera, such as one capable of capturing video images at an image display resolution of 1080p or better. While not shown, the A/V recording and communication doorbell 100 may also include other hardware and/or components, such as a housing, one or more motion sensors (and/or other types of sensors), a button, etc. The A/V recording and communication doorbell 100 may further include similar componentry and/or functionality as the wireless communication doorbells described in US Patent Application Publication Nos. 2015/0022620 (Application Serial No. 14/499,828) and 2015/0022618 (Application Serial No. 14/334, 922).

With further reference to Figure 1, the A/V recording and communication doorbell 100 communicates with a user's home wireless network 110, which may be for example a Wi-Fi network compatible with the IEEE 802.11 standard and/or other wireless communication standard(s). The user's wireless network 110 is connected to another network 112, which may comprise, for example, the Internet and/or a public switched telephone network (PSTN). As described below, the A/V recording and communication doorbell 100 may communicate with the user's client device 114 via the home wireless network 110 and the network 112. The user's client device 114 may comprise, for example, a mobile telephone (may also be referred to as a cellular telephone), such as a smartphone, a personal digital assistant (PDA), or another communication device. The user's client device 114 comprises a display (not shown) and related components capable of displaying streaming and/or recorded video images. The user's client device 114 may also comprise a speaker and related components capable of broadcasting streaming and/or recorded audio, and may also comprise a microphone. The A/V recording and communication doorbell 100 may also communicate with one or more remote storage device(s) 116 (may be referred to interchangeably as "cloud storage device(s)") and/or one or more servers 118 via the home wireless network 110 and the network 112. While Figure 1 illustrates the storage device 116 and the server 118 as components separate from the network 112, it is to be understood that the storage device 116 and/or the server 118 may be considered to be components of the network 112.

The network 112 may be any wireless network or any wired network, or a combination thereof, configured to operatively couple the above mentioned modules, devices, and systems as shown in Figure 1. For example, the network 112 may include one or more of the following: a PSTN (public switched telephone network), the Internet, a local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, a Digital Data Service (DDS) connection, a DSL (Digital Subscriber Line) connection, an Ethernet connection, an ISDN (Integrated Services Digital Network) line, a dial-up port such as a V.90, V.34, or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications may also include links to any of a variety of wireless networks, including WAP (Wireless Application Protocol), GPRS (General Packet Radio Service), GSM (Global System for Mobile Communication), CDMA (Code Division Multiple Access), TDMA (Time Division Multiple Access), FDMA (Frequency Division Multiple Access), and/or OFDMA (Orthogonal Frequency Division Multiple Access) cellular phone networks, GPS, CDPD (cellular digital packet data), RIM (Research in Motion, Limited) duplex paging network, Bluetooth radio, or an IEEE 802.11-based radio frequency network. The network can further include or interface with any one or more of the following: RS-232 serial connection, IEEE-1394 (Firewire) connection, Fibre Channel connection, IrDA (infrared) port, SCSI (Small Computer Systems Interface) connection, USB (Universal Serial Bus) connection, or other wired or wireless, digital or analog, interface or connection, mesh or Digi® networking.

According to one or more aspects of the present embodiments, when a person (may be referred to interchangeably as "visitor") arrives at the A/V recording and communication doorbell 100, the A/V recording and communication doorbell 100 detects the visitor's presence and begins capturing video images within a field of view of the camera 102. The A/V recording and communication doorbell 100 may also capture audio through the microphone 104. The A/V recording and communication doorbell 100 may detect the visitor's presence using a motion sensor, and/or by detecting that the visitor has depressed the button on the A/V recording and communication doorbell 100.

In response to the detection of the visitor, the A/V recording and communication doorbell 100 sends an alert to the user's client device 114 (Figure 1) via the user's home wireless network 110 and the network 112. The A/V recording and communication doorbell 100 also sends streaming video, and may also send streaming audio, to the user's client device 114. If the user answers the alert, two-way audio communication may then occur between the visitor and the user through the A/V recording and communication doorbell 100 and the user's client device 114. The user may view the visitor throughout the duration of the call, but the visitor cannot see the user (unless the A/V recording and communication doorbell 100 includes a display, which it may in some embodiments).

The video images captured by the camera 102 of the A/V recording and communication doorbell 100 (and the audio captured by the microphone 104) may be uploaded to the cloud and recorded on the remote storage device 116 (Figure 1). In some embodiments, the video and/or audio may be recorded on the remote storage device 116 even if the user chooses to ignore the alert sent to his or her client device 114.

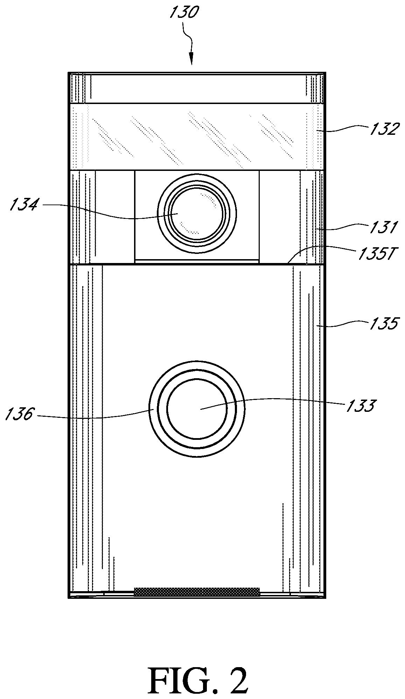

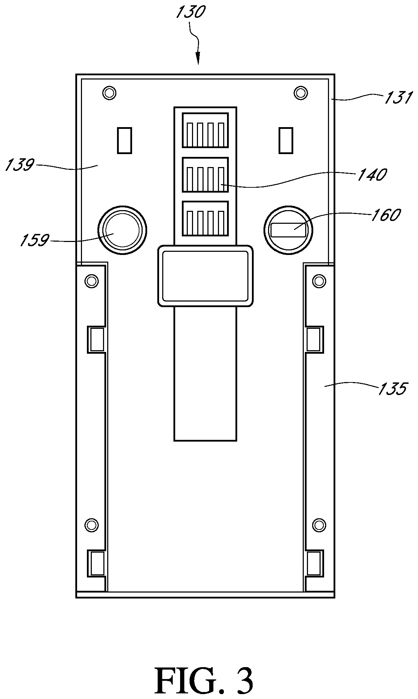

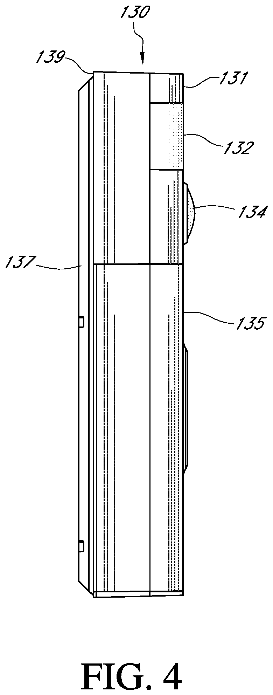

Figures 2-4 illustrate a wireless audio/video (A/V) communication doorbell 130 according to an an example not belonging to the present invention. Figure 2 is a front view, Figure 3 is a rear view, and Figure 4 is a left side view of the doorbell 130 coupled with a mounting bracket 137. The doorbell 130 includes a faceplate 135 mounted to a back plate 139 (Figure 3). With reference to Figure 4, the faceplate 135 has a substantially flat profile. The faceplate 135 may comprise any suitable material, including, without limitation, metals, such as brushed aluminum or stainless steel, metal alloys, or plastics. The faceplate 135 protects the internal contents of the doorbell 130 and serves as an exterior front surface of the doorbell 130.

With reference to Figure 2, the faceplate 135 includes a button 133 and a light pipe 136. The button 133 and the light pipe 136 may have various profiles that may or may not match the profile of the faceplate 135. The light pipe 136 may comprise any suitable material, including, without limitation, transparent plastic, that is capable of allowing light produced within the doorbell 130 to pass through. The light may be produced by one or more light-emitting components, such as light-emitting diodes (LED's), contained within the doorbell 130, as further described below. The button 133 may make contact with a button actuator (not shown) located within the doorbell 130 when the button 133 is pressed by a visitor. When pressed, the button 133 may trigger one or more functions of the doorbell 130, as further described below.

With reference to Figures 2 and 4, the doorbell 130 further includes an enclosure 131 that engages the faceplate 135. In the illustrated example, the enclosure 131 abuts an upper edge 135T (Figure 2) of the faceplate 135, but in alternative examples one or more gaps between the enclosure 131 and the faceplate 135 may facilitate the passage of sound and/or light through the doorbell 130. The enclosure 131 may comprise any suitable material, but in some examples the material of the enclosure 131 preferably permits infrared light to pass through from inside the doorbell 130 to the environment and vice versa. The doorbell 130 further includes a lens 132. In some examples, the lens may comprise a Fresnel lens, which may be patterned to deflect incoming light into one or more infrared sensors located within the doorbell 130. The doorbell 130 further includes a camera 134, which captures video data when activated, as described below.

Figure 3 is a rear view of the doorbell 130, according to an aspect of said example. As illustrated, the enclosure 131 may extend from the front of the doorbell 130 around to the back thereof and may fit snugly around a lip of the back plate 139. The back plate 139 may comprise any suitable material, including, without limitation, metals, such as brushed aluminum or stainless steel, metal alloys, or plastics. The back plate 139 protects the internal contents of the doorbell 130 and serves as an exterior rear surface of the doorbell 130. The faceplate 135 may extend from the front of the doorbell 130 and at least partially wrap around the back plate 139, thereby allowing a coupled connection between the faceplate 135 and the back plate 139. The back plate 139 may have indentations in its structure to facilitate the coupling.

With further reference to Figure 3, spring contacts 140 may provide power to the doorbell 130 when mated with other conductive contacts connected to a power source. The spring contacts 140 may comprise any suitable conductive material, including, without limitation, copper, and may be capable of deflecting when contacted by an inward force, for example the insertion of a mating element. The doorbell 130 further comprises a connector 160, such as a micro-USB or other connector, whereby power and/or data may be supplied to and from the components within the doorbell 130. A reset button 159 may be located on the back plate 139, and may make contact with a button actuator (not shown) located within the doorbell 130 when the reset button 159 is pressed. When the reset button 159 is pressed, it may trigger one or more functions, as described below.

Figure 4 is a left side profile view of the doorbell 130 coupled to the mounting bracket 137, according to an aspect of said example. The mounting bracket 137 facilitates mounting the doorbell 130 to a surface, such as the exterior of a building, such as a home or office. As illustrated in Figure 4, the faceplate 135 may extend from the bottom of the doorbell 130 up to just below the camera 134, and connect to the back plate 139 as described above. The lens 132 may extend and curl partially around the side of the doorbell 130. The enclosure 131 may extend and curl around the side and top of the doorbell 130, and may be coupled to the back plate 139 as described above. The camera 134 may protrude slightly through the enclosure 131, thereby giving it a wider field of view. The mounting bracket 137 may couple with the back plate 139 such that they contact each other at various points in a common plane of contact, thereby creating an assembly including the doorbell 130 and the mounting bracket 137. The couplings described in this paragraph, and elsewhere, may be secured by, for example and without limitation, screws, interference fittings, adhesives, or other fasteners. Interference fittings may refer to a type of connection where a material relies on pressure and/or gravity coupled with the material's physical strength to support a connection to a different element.

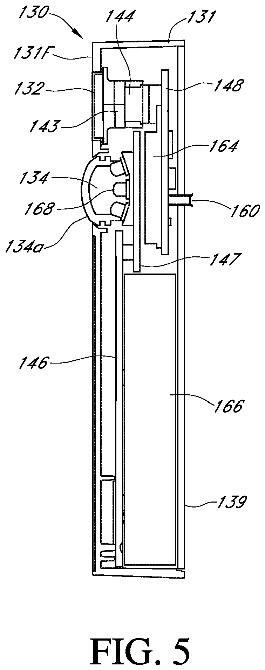

Figure 5 is a right side cross-sectional view of the doorbell 130 without the mounting bracket 137. In the illustrated example, the lens 132 is substantially coplanar with the front surface 131F of the enclosure 131. In alternative examples, the lens 132 may be recessed within the enclosure 131 or may protrude outward from the enclosure 131. The camera 134 is coupled to a camera printed circuit board (PCB) 147, and a lens 134a of the camera 134 protrudes through an opening in the enclosure 131. The camera lens 134a may be a lens capable of focusing light into the camera 134 so that clear images may be taken.

The camera PCB 147 may be secured within the doorbell with any suitable fasteners, such as screws, or interference connections, adhesives, etc. The camera PCB 147 comprises various components that enable the functionality of the camera 134 of the doorbell 130, as described below. Infrared light-emitting components, such as infrared LED's 168, are coupled to the camera PCB 147 and may be triggered to activate when a light sensor detects a low level of ambient light. When activated, the infrared LED's 168 may emit infrared light through the enclosure 131 and/or the camera 134 out into the ambient environment. The camera 134, which may be configured to detect infrared light, may then capture the light emitted by the infrared LED's 168 as it reflects off objects within the camera's 134 field of view, so that the doorbell 130 can clearly capture images at night (may be referred to as "night vision").

With continued reference to Figure 5, the doorbell 130 further comprises a front PCB 146, which in the illustrated example resides in a lower portion of the doorbell 130 adjacent a battery 166. The front PCB 146 may be secured within the doorbell 130 with any suitable fasteners, such as screws, or interference connections, adhesives, etc. The front PCB 146 comprises various components that enable the functionality of the audio and light components, as further described below. The battery 166 may provide power to the doorbell 130 components while receiving power from the spring contacts 140, thereby engaging in a tricklecharge method of power consumption and supply. Alternatively, the doorbell 130 may draw power directly from the spring contacts 140 while relying on the battery 166 only when the spring contacts 140 are not providing the power necessary for all functions.

With continued reference to Figure 5, the doorbell 130 further comprises a power PCB 148, which in the illustrated embodiment resides behind the camera PCB 147. The power PCB 148 may be secured within the doorbell 130 with any suitable fasteners, such as screws, or interference connections, adhesives, etc. The power PCB 148 comprises various components that enable the functionality of the power and device-control components, as further described below.

With continued reference to Figure 5, the doorbell 130 further comprises a communication module 164 coupled to the power PCB 148. The communication module 164 facilitates communication with client devices in one or more remote locations, as further described below. The connector 160 may protrude outward from the power PCB 148 and extend through a hole in the back plate 139. The doorbell 130 further comprises passive infrared (PIR) sensors 144, which are secured on or within a PIR sensor holder 143, and the assembly resides behind the lens 132. The PIR sensor holder 143 may be secured to the doorbell 130 with any suitable fasteners, such as screws, or interference connections, adhesives, etc. The PIR sensors 144 may be any type of sensor capable of detecting and communicating the presence of a heat source within their field of view. Further, alternative examples may comprise one or more motion sensors either in place of or in addition to the PIR sensors 144. The motion sensors may be configured to detect motion using any methodology, such as a methodology that does not rely on detecting the presence of a heat source within a field of view.

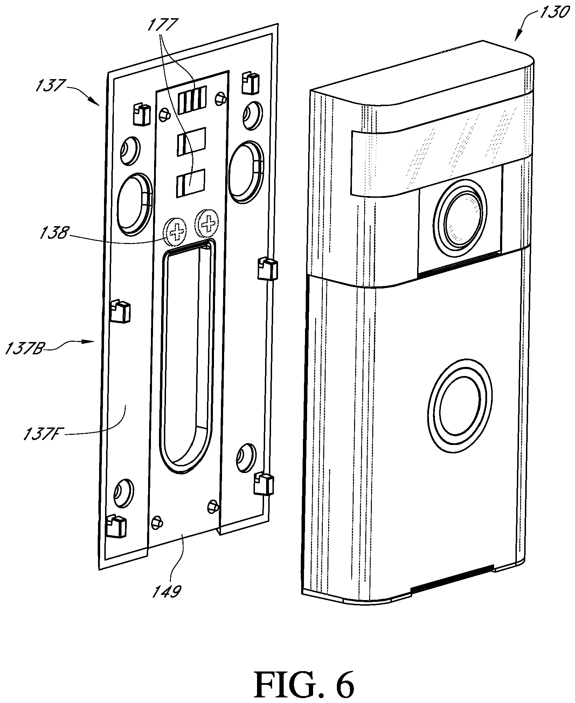

Figure 6 is an exploded view of the doorbell 130 and the mounting bracket 137 according to an aspect of the example. The mounting bracket 137 is configured to be mounted to a mounting surface (not shown) of a structure, such as a home or an office. Figure 6 shows the front side 137F of the mounting bracket 137. The mounting bracket 137 is configured to be mounted to the mounting surface such that the back side 137B thereof faces the mounting surface. In certain examples the mounting bracket 137 may be mounted to surfaces of various composition, including, without limitation, wood, concrete, stucco, brick, vinyl siding, aluminum siding, etc., with any suitable fasteners, such as screws, or interference connections, adhesives, etc. The doorbell 130 may be coupled to the mounting bracket 137 with any suitable fasteners, such as screws, or interference connections, adhesives, etc.

With continued reference to Figure 6, the illustrated example of the mounting bracket 137 includes the terminal screws 138. The terminal screws 138 are configured to receive electrical wires adjacent the mounting surface of the structure upon which the mounting bracket 137 is mounted, so that the doorbell 130 may receive electrical power from the structure's electrical system. The terminal screws 138 are electrically connected to electrical contacts 177 of the mounting bracket. If power is supplied to the terminal screws 138, then the electrical contacts 177 also receive power through the terminal screws 138. The electrical contacts 177 may comprise any suitable conductive material, including, without limitation, copper, and may protrude slightly from the face of the mounting bracket 137 so that they may mate with the spring contacts 140 located on the back plate 139.

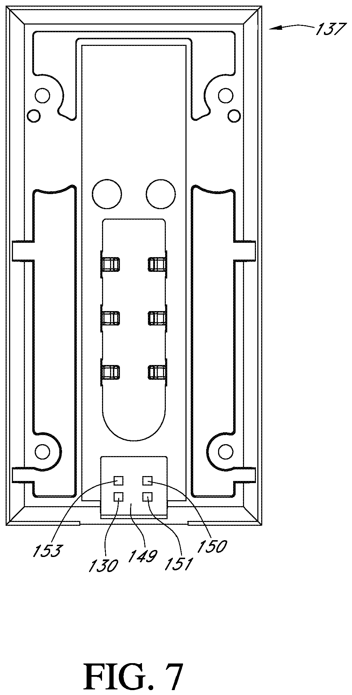

With reference to Figures 6 and 7 (which is a rear view of the mounting bracket 137), the mounting bracket 137 further comprises a bracket PCB 149. With reference to Figure 7, the bracket PCB 149 is situated outside the doorbell 130, and is therefore configured for various sensors that measure ambient conditions, such as an accelerometer 150, a barometer 151, a humidity sensor 152, and a temperature sensor 153. The functions of these components are discussed in more detail below. The bracket PCB 149 may be secured to the mounting bracket 137 with any suitable fasteners, such as screws, or interference connections, adhesives, etc.

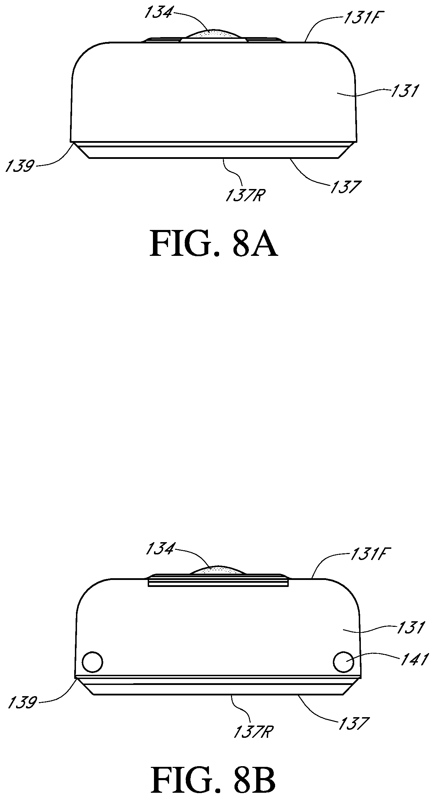

Figures 8A and 8B are top and bottom views, respectively, of the doorbell 130. As described above, the enclosure 131 may extend from the front face 131F of the doorbell 130 to the back, where it contacts and snugly surrounds the back plate 139. The camera 134 may protrude slightly beyond the front face 131F of the enclosure 131, thereby giving the camera 134 a wider field of view. The mounting bracket 137 may include a substantially flat rear surface 137R, such that the doorbell 130 and the mounting bracket 137 assembly may sit flush against the surface to which they are mounted. With reference to Figure 8B, the lower end of the enclosure 131 may include security screw apertures 141 configured to receive screws or other fasteners.

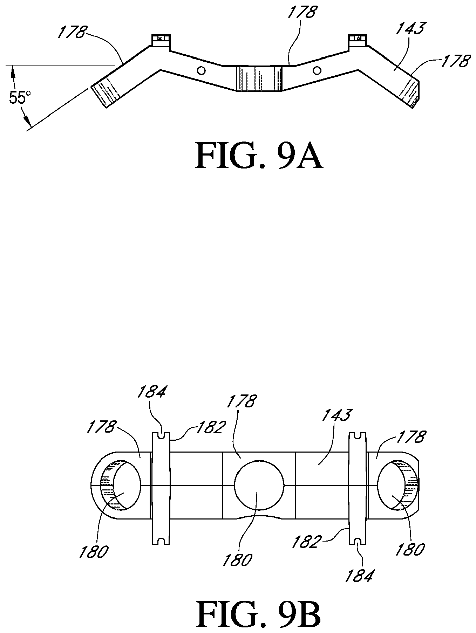

Figure 9A is a top view of the PIR sensor holder 143. The PIR sensor holder 143 may comprise any suitable material, including, without limitation, metals, metal alloys, or plastics. The PIR sensor holder 143 is configured to mount the PIR sensors 144 behind the lens 132 such that the PIR sensors 144 face out through the lens 132 at varying angles, thereby creating a wide field of view for the PIR sensors 144, and dividing the field of view into zones, as further described below. With further reference to Figure 9A, the PIR sensor holder 143 includes one or more faces 178 within or on which the PIR sensors 144 may be mounted. In the illustrated example, the PIR sensor holder 143 includes three faces 178, with each of two outer faces 178 angled at 55° with respect to a center one of the faces 178. In alternative examples, the angle formed by adjacent ones of the faces 178 may be increased or decreased as desired to alter the field of view of the PIR sensors 144.

Figure 9B is a front view of the PIR sensor holder 143. In the illustrated example, each of the faces 178 includes a through hole 180 in which the PIR sensors 144 may be mounted. First and second brackets 182, spaced from one another, extend transversely across the PIR sensor holder 143. Each of the brackets 182 includes notches 184 at either end. The brackets 182 may be used to secure the PIR sensor holder 143 within the doorbell 130. In alternative examples, the through holes 180 in the faces 178 may be omitted. For example, the PIR sensors 144 may be mounted directly to the faces 178 without the through holes 180. Generally, the faces 178 may be comprise any structure configured to locate and secure the PIR sensors 144 in place.

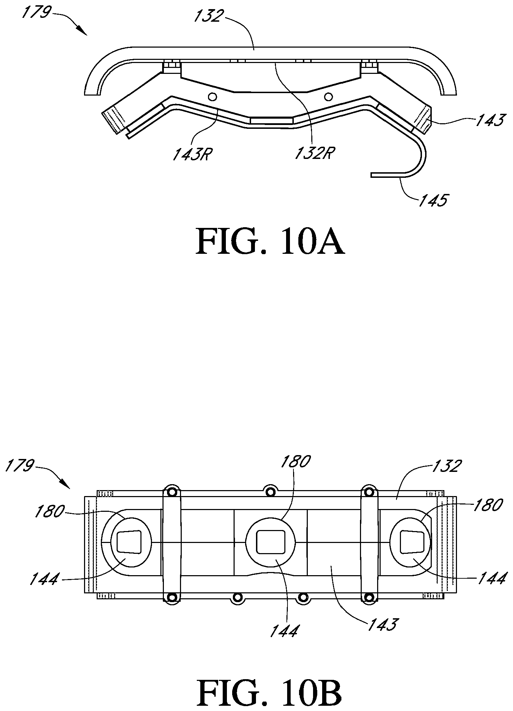

Figures 10A and 10B are top and front views, respectively, of a PIR sensor assembly 179, including the PIR sensor holder 143, the lens 132, and a flexible power circuit 145. The PIR sensor holder 143 may be secured to a rear face 132R of the lens 132, as shown, with the brackets 182 abutting the rear face 132R of the lens 132. The flexible power circuit 145, which may be any material or component capable of delivering power and/or data to and from the PIR sensors 144, is secured to a rear face 143R of the PIR sensor holder 143, and may be contoured to match the angular shape of the PIR sensor holder 143. The flexible power circuit 145 may connect to, draw power from, and/or transmit data to and/or from, the power PCB 148 (Figure 5).

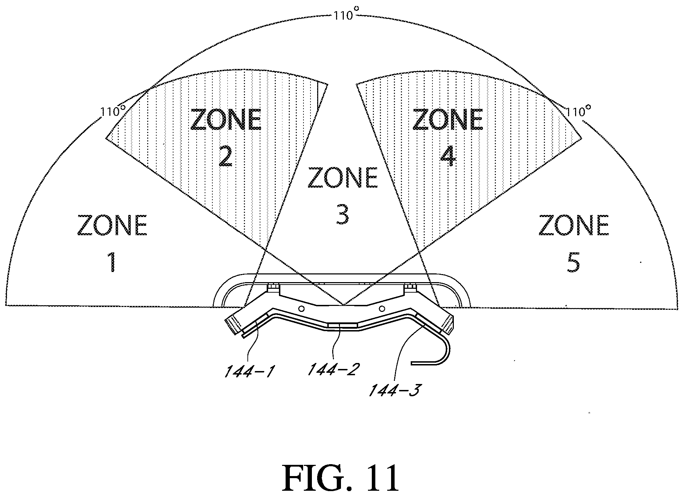

Figure 11 is a top view of the PIR sensor assembly 179 illustrating the fields of view of the PIR sensors 144. Each PIR sensor 144 includes a field of view, referred to as a "zone," that traces an angle extending outward from the respective PIR sensor 144. Zone 1 is the area that is visible only to Passive Infrared Sensor 144-1. Zone 2 is the area that is visible only to the PIR sensors 144-1 and 144-2. Zone 3 is the area that is visible only to Passive Infrared Sensor 144-2. Zone 4 is the area that is visible only to the PIR sensors 144-2 and 144-3. Zone 5 is the area that is visible only to Passive Infrared Sensor 144-3. The doorbell 130 may be capable of determining the direction that an object is moving based upon which zones are triggered in a time sequence. In the illustrated example, each zone extends across an angle of 110°. In alternative examples, each zone may extend across a different angle, such as one greater than or less than 110°.

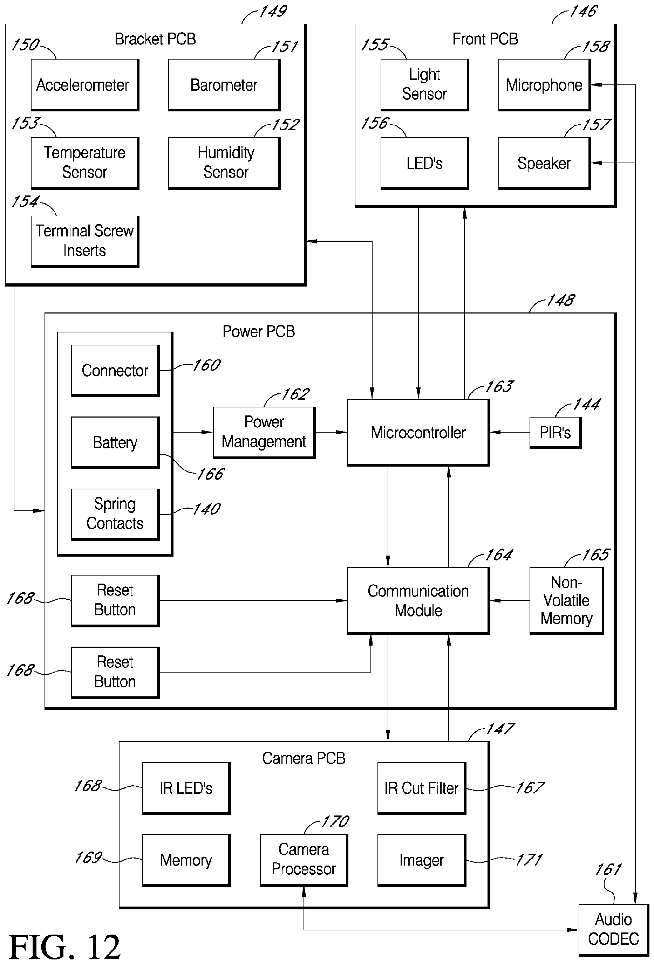

Figure 12 is a functional block diagram of the components within or in communication with the doorbell 130, according to an aspect of the examples. As described above, the bracket PCB 149 may comprise an accelerometer 150, a barometer 151, a humidity sensor 152, and a temperature sensor 153. The accelerometer 150 may be one or more sensors capable of sensing motion and/or acceleration. The barometer 151 may be one or more sensors capable of determining the atmospheric pressure of the surrounding environment in which the bracket PCB 149 may be located. The humidity sensor 152 may be one or more sensors capable of determining the amount of moisture present in the atmospheric environment in which the bracket PCB 149 may be located. The temperature sensor 153 may be one or more sensors capable of determining the temperature of the ambient environment in which the bracket PCB 149 may be located. As described above, the bracket PCB 149 may be located outside the housing of the doorbell 130 so as to reduce interference from heat, pressure, moisture, and/or other stimuli generated by the internal components of the doorbell 130.

With further reference to Figure 12, the bracket PCB 149 may further comprise terminal screw inserts 154, which may be configured to receive the terminal screws 138 and transmit power to the electrical contacts 177 on the mounting bracket 137 (Figure 6). The bracket PCB 149 may be electrically and/or mechanically coupled to the power PCB 148 through the terminal screws 138, the terminal screw inserts 154, the spring contacts 140, and the electrical contacts 177. The terminal screws 138 may receive electrical wires located at the surface to which the doorbell 130 is mounted, such as the wall of a building, so that the doorbell can receive electrical power from the building's electrical system. Upon the terminal screws 138 being secured within the terminal screw inserts 154, power may be transferred to the bracket PCB 149, and to all of the components associated therewith, including the electrical contacts 177. The electrical contacts 177 may transfer electrical power to the power PCB 148 by mating with the spring contacts 140.

With further reference to Figure 12, the front PCB 146 may comprise a light sensor 155, one or more light-emitting components, such as LED's 156, one or more speakers 157, and a microphone 158. The light sensor 155 may be one or more sensors capable of detecting the level of ambient light of the surrounding environment in which the doorbell 130 may be located. LED's 156 may be one or more light-emitting diodes capable of producing visible light when supplied with power. The speakers 157 may be any electromechanical device capable of producing sound in response to an electrical signal input. The microphone 158 may be an acoustic-to-electric transducer or sensor capable of converting sound waves into an electrical signal. When activated, the LED's 156 may illuminate the light pipe 136 (Figure 2). The front PCB 146 and all components thereof may be electrically coupled to the power PCB 148, thereby allowing data and/or power to be transferred to and from the power PCB 148 and the front PCB 146.

The speakers 157 and the microphone 158 may be coupled to the camera processor 170 through an audio CODEC 161. For example, the transfer of digital audio from the user's client device 114 and the speakers 157 and the microphone 158 may be compressed and decompressed using the audio CODEC 161, coupled to the camera processor 170. Once compressed by audio CODEC 161, digital audio data may be sent through the communication module 164 to the network 112, routed by one or more servers 118, and delivered to the user's client device 114. When the user speaks, after being transferred through the network 112, digital audio data is decompressed by audio CODEC 161 and emitted to the visitor via the speakers 157.

With further reference to Figure 12, the power PCB 148 may comprise a power management module 162, a microcontroller 163, the communication module 164, and power PCB non-volatile memory 165. In certain embodiments, the power management module 162 may comprise an integrated circuit capable of arbitrating between multiple voltage rails, thereby selecting the source of power for the doorbell 130. The battery 166, the spring contacts 140, and/or the connector 160 may each provide power to the power management module 162. The power management module 162 may have separate power rails dedicated to the battery 166, the spring contacts 140, and the connector 160. In one aspect of the present disclosure, the power management module 162 may continuously draw power from the battery 166 to power the doorbell 130, while at the same time routing power from the spring contacts 140 and/or the connector 160 to the battery 166, thereby allowing the battery 166 to maintain a substantially constant level of charge. Alternatively, the power management module 162 may continuously draw power from the spring contacts 140 and/or the connector 160 to power the doorbell 130, while only drawing from the battery 166 when the power from the spring contacts 140 and/or the connector 160 is low or insufficient. The power management module 162 may also serve as a conduit for data between the connector 160 and the microcontroller 163.

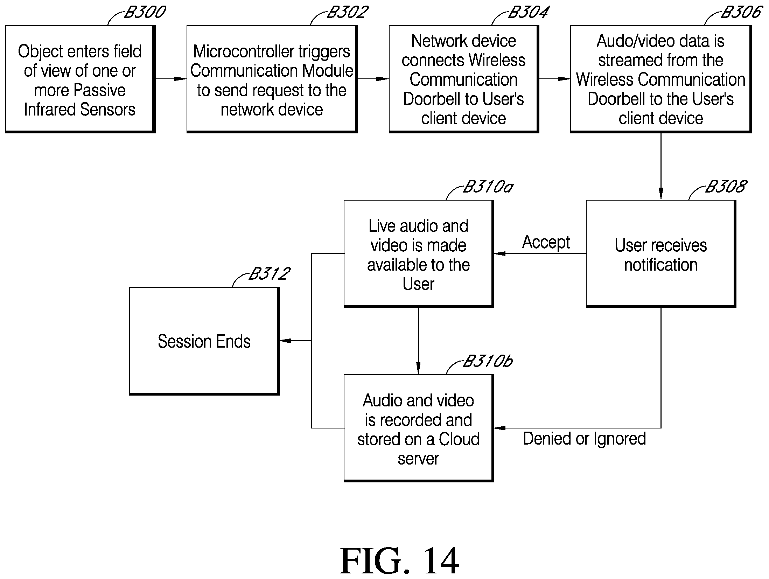

With further reference to Figure 12, in certain examples the microcontroller 163 may comprise an integrated circuit including a processor core, memory, and programmable input/output peripherals. The microcontroller 163 may receive input signals, such as data and/or power, from the PIR sensors 144, the bracket PCB 149, the power management module 162, the light sensor 155, the microphone 158, and/or the communication module 164, and may perform various functions as further described below. When the microcontroller 163 is triggered by the PIR sensors 144, the microcontroller 163 may be triggered to perform one or more functions, such as those described below with reference to Figure 14. When the light sensor 155 detects a low level of ambient light, the light sensor 155 may trigger the microcontroller 163 to enable "night vision," as further described below. The microcontroller 163 may also act as a conduit for data communicated between various components and the communication module 164.

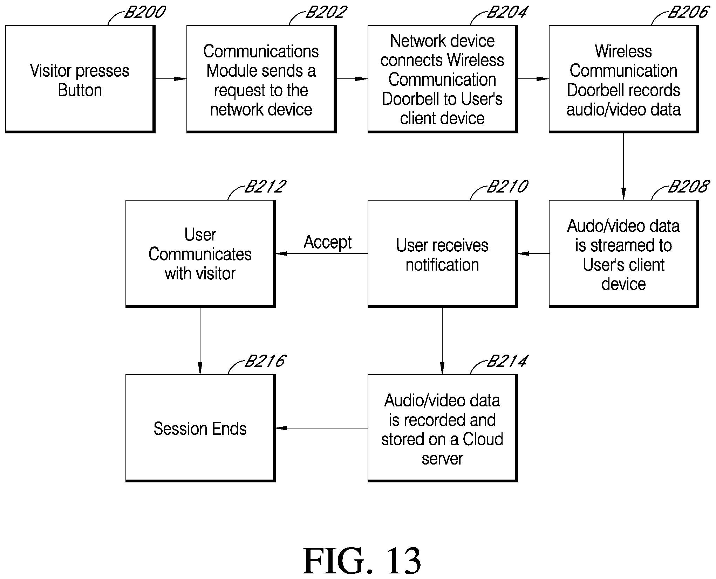

With further reference to Figure 12, the communication module 164 may comprise an integrated circuit including a processor core, memory, and programmable input/output peripherals. The communication module 164 may also be configured to transmit data wirelessly to a remote network device, and may include one or more transceivers (not shown). The wireless communication may comprise one or more wireless networks, such as, without limitation, Wi-Fi, cellular, Bluetooth, and/or satellite networks. The communication module 164 may receive inputs, such as power and/or data, from the camera PCB 147, the microcontroller 163, the button 133, the reset button 159, and/or the power PCB non-volatile memory 165. When the button 133 is pressed, the communication module 164 may be triggered to perform one or more functions, such as those described below with reference to Figure 13. When the reset button 159 is pressed, the communication module 164 may be triggered to erase any data stored at the power PCB non-volatile memory 165 and/or at the camera PCB memory 169. The communication module 164 may also act as a conduit for data communicated between various components and the microcontroller 163. The power PCB non-volatile memory 165 may comprise flash memory configured to store and/or transmit data. For example, in certain examples the power PCB non-volatile memory 165 may comprise serial peripheral interface (SPI) flash memory.

With further reference to Figure 12, the camera PCB 147 may comprise components that facilitate the operation of the camera 134. For example, an imager 171 may comprise a video recording sensor and/or a camera chip. In one aspect of the present disclosure, the imager 171 may comprise a complementary metal-oxide semiconductor (CMOS) array, and may be capable of recording high definition (1080p or better) video files. A camera processor 170 may comprise an encoding and compression chip. In some embodiments, the camera processor 170 may comprise a bridge processor. The camera processor 170 may process video recorded by the imager 171 and audio recorded by the microphone 158, and may transform this data into a form suitable for wireless transfer by the communication module 164 to a network. The camera PCB memory 169 may comprise volatile memory that may be used when data is being buffered or encoded by the camera processor 170. For example, in certain embodiments the camera PCB memory 169 may comprise synchronous dynamic random access memory (SD RAM). IR LED's 168 may comprise light-emitting diodes capable of radiating infrared light. IR cut filter 167 may comprise a system that, when triggered, configures the imager 171 to see primarily infrared light as opposed to visible light. When the light sensor 155 detects a low level of ambient light (which may comprise a level that impedes the performance of the imager 171 in the visible spectrum), the IR LED's 168 may shine infrared light through the doorbell 130 enclosure out to the environment, and the IR cut filter 167 may enable the imager 171 to see this infrared light as it is reflected or refracted off of objects within the field of view of the doorbell. This process may provide the doorbell 130 with the "night vision" function mentioned above.

Figure 13 is a flowchart illustrating one embodiment of a process according to an aspect of the present disclosure. At block B200, a visitor presses the button 133 on the doorbell 130. At block B202, the communication module 164 sends a request to a network device. Once the network device receives the request, at block B204 the network device may connect the doorbell 130 to the user's client device 114 through the user's wireless network 110 and the network 112. In block B206, the doorbell 130 may record available audio and/or video data using the camera 134, the microphone 158, and/or any other sensor available. At block B208, the audio and/or video data is transmitted to the user's client device 114. At block B210, the user may receive a notification on his or her client device 114 prompting him or her to either accept or deny. If the user denies the notification, then the process advances to block B214, where the audio and/or video data is recorded and stored at a cloud server. The session then ends at block B216 and the connection between the doorbell 130 and the user's client device 114 is terminated. If, however, the user elects to accept the notification, then at block B212 the user communicates with the visitor through the user's client device 114 while being provided audio and/or video data captured by the camera 134, the microphone 158, and/or other sensors. At the end of the call, the user may terminate the connection between the user's client device 114 and the doorbell 130 and the session ends at block B216. In some embodiments, the audio and/or video data may be recorded and stored at a cloud server (block B214) even if the user accepts the notification and communicates with the visitor through the user's client device 114.

Figure 14 is a flowchart illustrating another embodiment of a process according to an aspect of the present disclosure. At block B300, an object may move into the field of view of one or more of the PIR sensors 144. At block B302, the PIR sensors 144 may trigger the microcontroller 163, which may then trigger the communication module 164 to send a request to a network device. At block B304, the network device may connect the doorbell 130 to the user's client device 114 through the user's wireless network 110 and the network 112. At block B306, the doorbell 130 may record available audio and/or video data using the camera 134, the microphone 158, and/or any other available sensor, and stream the data to the user's client device 114. At block B308, the user may receive a notification prompting the user to either accept or deny the notification. If the notification is accepted, then at block B310a the live audio/video data may be displayed on the user's client device 114, thereby allowing the user surveillance from the perspective of the doorbell 130. When the user is satisfied with this function, the user may sever the connection at block B312, whereby the session ends. If, however, at block B308 the user denies the notification, or ignores the notification and a specified time interval elapses, then the connection between the doorbell 130 and the user's client device 114 is terminated and the audio/video data is recorded and stored at a cloud server at block B310b, such that the user may view the audio/video data later at their convenience. The doorbell 130 may be configured to record for a specified period of time in the event the notification in block B308 is denied or ignored. If such a time period is set, the doorbell 130 may record data for that period of time before ceasing operation at block B312 thereby ending the session. In some embodiments, the audio and/or video data may be recorded and stored at a cloud server (block B310b) even if the user accepts the notification and communicates with the visitor through the user's client device 114.

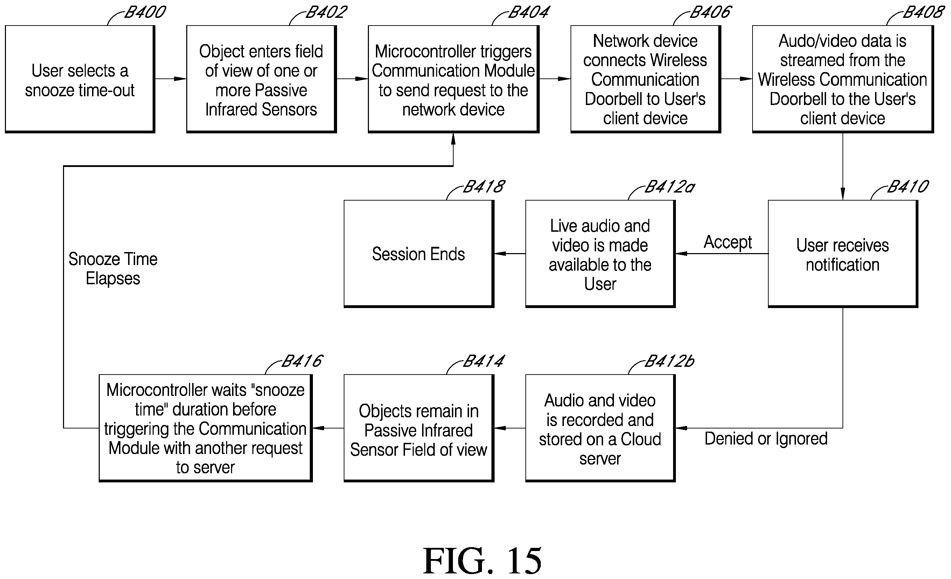

Figure 15 is a flowchart illustrating another embodiment of a process according to an aspect of the present disclosure. At block B400, the user may select a "snooze time-out," which is a time period during which the doorbell 130 may deactivate or otherwise not respond to stimuli (such as light, sound, or heat signatures) after an operation is performed, e.g. a notification is either accepted or denied/ignored. For example, the user may set a snooze time-out of 15 minutes. At block B402, an object moves into the field of view of one or more of the PIR sensors 144. At block B404, the microcontroller 163 may trigger the communication module 164 to send a request to a network device. In block B406, the network device may connect the doorbell 130 to the user's client device 114 through the user's wireless network 110 and the network 112. At block B408, audio/video data captured by the doorbell 130 may be streamed to the user's client device 114. At block B410, the user may receive a notification prompting the user to either accept or deny/ignore the request. If the request is denied or ignored, then at block B412b audio/video data may be recorded and stored at a cloud server. After the doorbell 130 finishes recording, the objects may remain in the PIR sensor 144 field of view at block B414. In block B416, the microcontroller 163 waits for the "snooze time" to elapse, e.g. 15 minutes, before triggering the communication module 164 to submit another request to the network device. After the snooze time, e.g. 15 minutes, elapses, the process moves back to block B404 and progresses as described above. The cycle may continue like this until the user accepts the notification request at block B410. The process then moves to block B412a, where live audio and/or video data is displayed on the user's client device 114, thereby allowing the user surveillance from the perspective of the doorbell 130. At the user's request, the connection may be severed and the session ends at block B418. At this point the user may elect for the process to revert back to block B416, whereby there may be no further response until the snooze time, e.g. 15 minutes, has elapsed from the end of the previous session, or the user may elect for the process to return to block B402 and receive a notification the next time an object is perceived by one or more of the PIR sensors 144. In some embodiments, the audio and/or video data may be recorded and stored at a cloud server (block B412b) even if the user accepts the notification and communicates with the visitor through the user's client device 114.

As described below, some of the present embodiments and further examples not belonging to the present invention advantageously locate an image sensor or a camera of the wireless A/V recording and communication doorbell behind, and/or integrate the image sensor or camera into, the doorbell button (e.g. the button used to actuate the doorbell, including sounding an audible tone and/or initiating recording of audio and/or video and/or transmitting audio and/or video). Locating the image sensor or camera behind the button, and/or integrating the image sensor or camera into the button, may conserve space within the doorbell, thereby enabling the size of the outer envelope of the doorbell to be reduced, which in turn may give the doorbell a more streamlined and visually pleasing appearance. In some examples in which the image sensor or the camera is integrated into the doorbell button, the image sensor or the camera may comprise the doorbell button, e.g. the image sensor or the camera may be configured such that the visitor presses the image sensor or the camera in order to actuate the doorbell (e.g. to sound an audible tone and/or initiate recording of audio and/or video and/or initiate transmitting of audio and/or video).

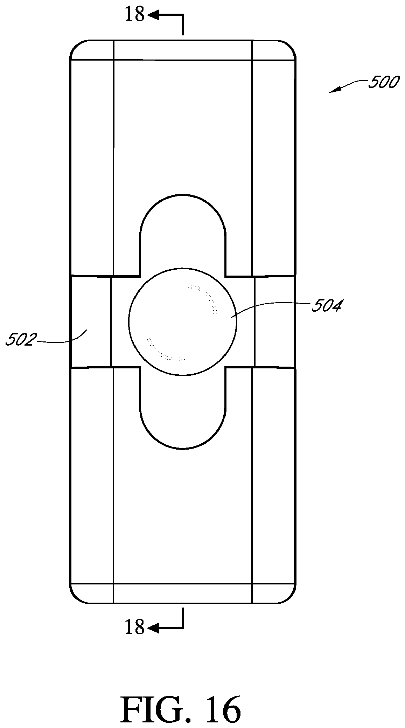

Figure 16 is a front view of an embodiment of a wireless A/V recording and communication device 500 according to an aspect of the present disclosure. In the illustrated embodiment, the wireless A/V recording and communication device 500 is a doorbell. Further examples of wireless A/V recording and communication devices may be found in U.S. patent application Serial No. 14/099,828, filed on September 29, 2014, and U.S. patent application Serial No. 62/308,746, filed on March 15, 2016.

The wireless A/V recording and communication device 500 may include a housing 502, which may include but is not limited to plastic, metal, or wood. The housing 502 may serve as an exterior surface of the wireless A/V recording and communication device 500 and protect components within. In one aspect of the present disclosure, the housing 502 may be IR transmissive, so as to allow infrared light to pass through. The housing 502 may contain an aperture 503 that allows a button 504 and/or a camera 506 to protrude through. The button 504 may act as a trigger to activate the wireless A/V recording and communication device 500. When the housing 502 and the button 504 are mechanically coupled, the wireless A/V recording and communication device 500 may be sealed hermetically. The button 504 may be any optically transparent or translucent material so as to allow light to pass through to an imager 508 located behind or within the button 504. The button 504 may have convex, concave, or flat geometry, but preferably the configuration of the button 504 does not significantly distort the way in which light passes through the button 504. In one aspect of the present disclosure, the button 504 may have a tinted surface, so as to appear opaque, yet still be capable of allowing light to pass through to the inside of the housing 502. Locating the camera 506 or the imager 508 behind the button 504, and/or integrating the camera 506 or the imager 508 into the button 504, may conserve space within the doorbell 500, thereby enabling the size of the outer envelope of the doorbell 500 to be reduced, which in turn may give the doorbell 500 a more streamlined and visually pleasing appearance.

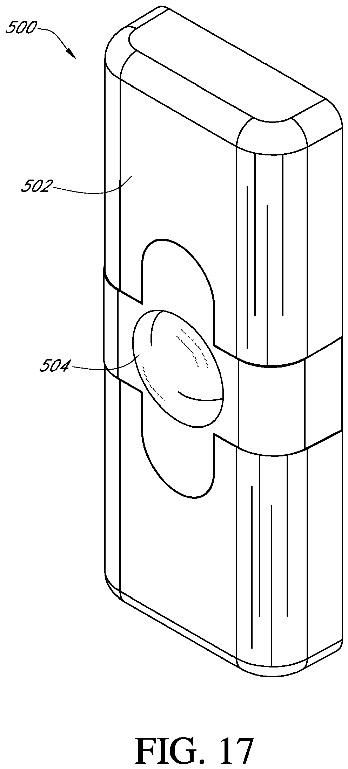

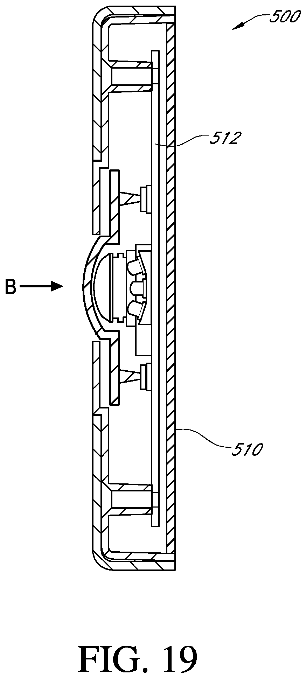

Figure 17 is a front perspective view of the wireless A/V recording and communication doorbell of Figure 16. The perspective view of the housing 502 in Figure 17 illustrates the depth of the housing 502. In one aspect of the present disclosure, the housing 502, and all components within, may be mounted to a wall or an exterior surface of a structure using mechanical features (not shown) built into a rear surface 510 (Figure 19) of the housing 502 and/or mechanical fasteners or mechanical coupling features.

Embodiments of the present wireless A/V recording and communication device 500 may include components similar to the doorbells 100, 130 described above, such as components for wirelessly transmitting audio and/or video, one or more speakers, one or more microphones, one or more antennas, one or more rechargeable batteries, and/or one or more motion sensing peripherals, such as passive infrared (PIR) sensors. In one aspect of the present disclosure, the wireless A/V recording and communication device 500 may replace a doorbell and/or an outdoor camera on the exterior surface of a home, office, or property. In this aspect, after a visitor presses the button 504 or the camera 506, the wireless A/V recording and communication device 500 may stream audio and/or video to the owner's smartphone, tablet, or computer using wireless communication protocols such as but not limited to Wi-Fi, Bluetooth, or Zigbee technology. The owner may then communicate with the visitor using a smartphone, tablet, or computer via the on-board microphones and speakers, which may be built into the wireless A/V recording and communication device 500.

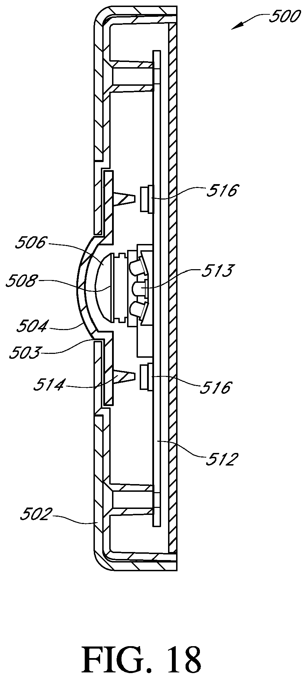

Figures 18 and 19 are cross-sectional right side views of the wireless A/V recording and communication doorbell of Figure 16, taken along the section line A-A in Figure 16. Figure 18 shows the button 504 in a static position, and Figure 19 shows the button 504 in a depressed position. In the static position of Figure 18, the housing 502 is cut away to show components within the wireless A/V recording and communication device 500, some of which may have been omitted for clarity. According to an aspect of the present disclosure, the button 504 may be movably mechanically coupled to the housing 502, allowing the button to travel when pressed by a human finger. After the button 504 is released, the button 504 may return to its original position. The housing 502 may contain mechanical features that secure a printed circuit board (PCB) 512 using fasteners, glue, or mechanical coupling features, for example. In one aspect of the present disclosure, the camera 506 sits behind and concentric to the button 504. The camera 506 is located on the surface of and is electrically coupled to the PCB 512. In this aspect, the button 504 may be transparent or translucent, and allows light to be directed into the camera 506 without significantly adversely affecting the images produced by the camera 506.

The camera 506 may include, or may communicate with, components integral to the operation of the camera 506, such as the imager 508 and/or a bridge processor (not shown in Figures 16-21, but may be similar to the microcontroller 163 described above). The imager 508 may be a video recording sensor or a camera chip, for example. In one aspect of the present disclosure, the imager 508 may include a CMOS (complementary metal-oxide-semiconductor) array, for example, and may be capable of recording high definition video files. The bridge processor may process video data recorded by the imager 508, and may transform this data into a form suitable for wireless transfer by a communication module (not shown in Figures 16-21, but may be similar to the communication module 164 described above).

Infrared (IR) light-emitting components, such as IR LED's 513, may be operatively connected to the PCB 512 and may be triggered to activate when a light sensor (not shown) or the camera 506 detects a low level of ambient light. When activated, the IR LED's 513 may emit infrared light out into the ambient environment. The camera 506, which may be configured to detect infrared light, may then capture the light emitted by the IR LED's 513 as it reflects off objects within the camera's 506 field of view, so that the doorbell 500 can clearly capture images at night (may be referred to as "night vision"). In the embodiment illustrated in Figures 18 and 19, the IR LED's 513 are located behind or within the button 504. Locating the IR LED's 513 behind or within the button 504 conserves space within the doorbell 500, thereby enabling the size of the outer envelope of the doorbell 500 to be reduced, which in turn may give the doorbell 500 a more streamlined and visually pleasing appearance.

With reference to Figure 19, button stems 514 are protruding mechanical features designed into the button 504. When the button 504 is pressed, as shown in Figure 19 in the direction of arrow B, the button stems 514 make contact with button actuators 516. The button actuators 516 are located on the surface of and are electrically coupled to the PCB 512. When one or more of the button actuators 516 are compressed as a result of the button 504 being pressed, the button actuators 516 may activate the camera 506 and/or other components within the wireless A/V recording and communication device 500 used to transmit audio and/or video.

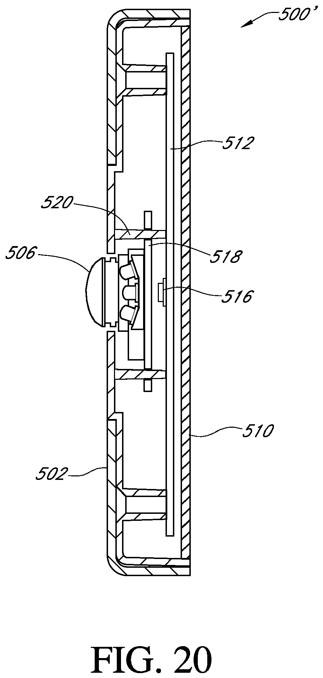

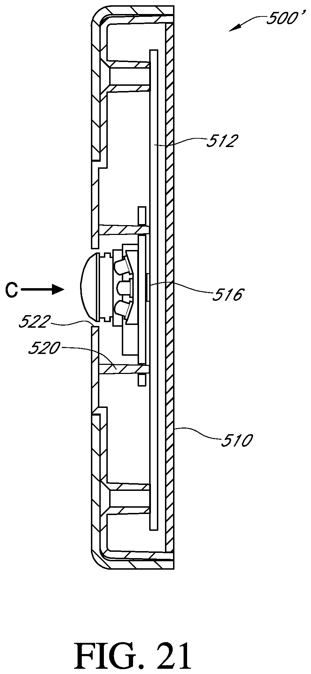

Figures 20 and 21 are cross-sectional right side views of an example not belonging to the present invention of the wireless A/V recording and communication doorbell 500' of Figure 16, taken along the section line A-A in Figure 16. In this example, the button 504 is omitted, and the camera 506 also serves as a button that a visitor may depress to activate the doorbell 500'. Omitting the button as a discrete component with respect to the camera further conserves space within the doorbell 500', thereby enabling the size of the outer envelope of the doorbell 500' to be reduced even further in comparison to the embodiment of the doorbell 500 of Figures 16-19.

Also in this example, a camera PCB 518 moves within the housing 502 when the camera 506 is pressed. Figure 20 shows the camera PCB 518 in a static position, and Figure 21 shows the camera PCB 518 in a depressed position. In the static position of Figure 18, the housing 502 is cut away to show components within the wireless A/V recording and communication device 500, some of which may have been omitted for clarity. The housing 502 may contain mechanical features that secure the PCB 512 using fasteners, glue, or mechanical coupling features. The button actuators 516 may be located on the surface of and electrically coupled to the PCB 512. When one or more button actuators 516 are compressed, they may activate the camera 506 and/or other components within the wireless A/V recording and communication device 500 used to transmit audio and/or video.

Still referencing Figure 20, the housing 502 may contain one or more tracking bosses 520 according to an aspect of the present disclosure. The tracking bosses 520 may be mechanical features built in to the housing 502 to help contain and guide moving components within the assembly, such as the camera PCB 518. According to one aspect of the present disclosure, the camera PCB 518 may include through-holes that receive the tracking bosses 520 to maintain the alignment of the camera PCB 518. The through-holes may comprise holes drilled through the camera PCB 518. In this aspect, the through-holes may align concentrically with the tracking bosses 520.

With reference to Figure 21, which shows the camera PCB 518 in a depressed position, the camera 506 may be located on the surface of and electrically coupled to the camera PCB 518, according to one aspect of the present disclosure. The housing 502 may contain an aperture 522 through which the camera 506 may protrude. In this aspect of the present disclosure, the camera 506 may be used as a button that can be pressed by a user/visitor. When the camera 506 is depressed in the direction of the Arrow C, the camera PCB 518 may travel in the direction of the Arrow C, using the tracking bosses 520 to stay aligned and parallel to the PCB 512. In this aspect, when the camera PCB 518 is fully depressed, the camera PCB 518, or a part located on or within the camera PCB 518, makes contact with one or more of the button actuators 516 located on the PCB 512. When the button actuators 516 are compressed, they may activate the camera 506 and/or other components within the wireless A/V recording and communication device 500 used to transmit audio and/or video.

As described above, some of the present embodiments and examples locate an image sensor or camera of the wireless A/V recording and communication doorbell behind, and/or integrate the image sensor or camera into, the doorbell button (e.g. the button used to actuate the doorbell, including sounding an audible tone and/or initiating recording of audio and/or video and/or initiating transmitting of audio and/or video). Locating the image sensor or camera behind the button, and/or integrating the image sensor or camera into the button, may conserve space within the doorbell, thereby enabling the size of the outer envelope of the doorbell to be reduced, which in turn may give the doorbell a more streamlined and visually pleasing appearance. In some examples in which the image sensor or the camera is integrated into the doorbell button, the image sensor or the camera may comprise the doorbell button, e.g. the image sensor or the camera may be configured such that the visitor presses the image sensor or the camera in order to actuate the doorbell (e.g. to sound an audible tone and/or initiate recording of audio and/or video).

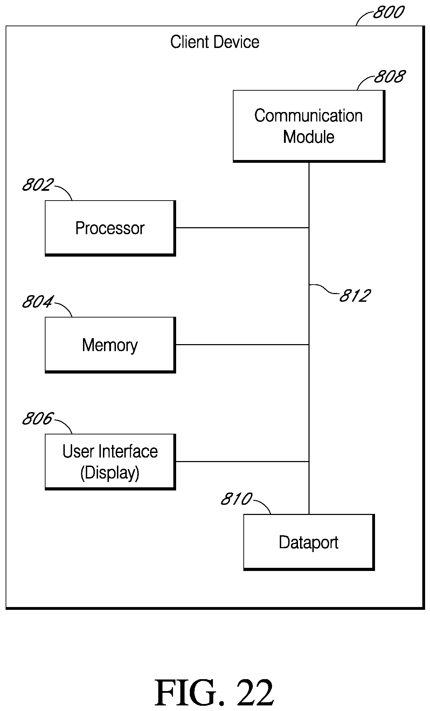

Figure 22 is a functional block diagram of a client device 800 on which the present embodiments may be implemented according to various aspects of the present disclosure. The user's client device 114 described with reference to Figure 1 may include some or all of the components and/or functionality of the client device 800. The client device 800 may comprise, for example, a smartphone.

With reference to Figure 22, the client device 800 includes a processor 802, a memory 804, a user interface 806, a communication module 808, and a dataport 810. These components are communicatively coupled together by an interconnect bus 812. The processor 802 may include any processor used in smartphones and/or portable computing devices, such as an ARM processor (a processor based on the RISC (reduced instruction set computer) architecture developed by Advanced RISC Machines (ARM).). In some embodiments, the processor 802 may include one or more other processors, such as one or more conventional microprocessors, and/or one or more supplementary co-processors, such as math co-processors.

The memory 804 may include both operating memory, such as random access memory (RAM), as well as data storage, such as read-only memory (ROM), hard drives, flash memory, or any other suitable memory/storage element. The memory 804 may include removable memory elements, such as a CompactFlash card, a MultiMediaCard (MMC), and/or a Secure Digital (SD) card. In some embodiments, the memory 804 may comprise a combination of magnetic, optical, and/or semiconductor memory, and may include, for example, RAM, ROM, flash drive, and/or a hard disk or drive. The processor 802 and the memory 804 each may be, for example, located entirely within a single device, or may be connected to each other by a communication medium, such as a USB port, a serial port cable, a coaxial cable, an Ethernettype cable, a telephone line, a radio frequency transceiver, or other similar wireless or wired medium or combination of the foregoing. For example, the processor 802 may be connected to the memory 804 via the dataport 810.

The user interface 806 may include any user interface or presentation elements suitable for a smartphone and/or a portable computing device, such as a keypad, a display screen, a touchscreen, a microphone, and a speaker. The communication module 808 is configured to handle communication links between the client device 800 and other, external devices or receivers, and to route incoming/outgoing data appropriately. For example, inbound data from the dataport 810 may be routed through the communication module 808 before being directed to the processor 802, and outbound data from the processor 802 may be routed through the communication module 808 before being directed to the dataport 810. The communication module 808 may include one or more transceiver modules capable of transmitting and receiving data, and using, for example, one or more protocols and/or technologies, such as GSM, UMTS (3GSM), IS-95 (CDMA one), IS-2000 (CDMA 2000), LTE, FDMA, TDMA, W-CDMA, CDMA, OFDMA, Wi-Fi, WiMAX, or any other protocol and/or technology.

The dataport 810 may be any type of connector used for physically interfacing with a smartphone and/or a portable computing device, such as a mini-USB port or an IPHONE®/IPOD® 30-pin connector or LIGHTNING® connector. In other embodiments, the dataport 810 may include multiple communication channels for simultaneous communication with, for example, other processors, servers, and/or client terminals.

The memory 804 may store instructions for communicating with other systems, such as a computer. The memory 804 may store, for example, a program (e.g., computer program code) adapted to direct the processor 802 in accordance with the present embodiments. The instructions also may include program elements, such as an operating system. While execution of sequences of instructions in the program causes the processor 802 to perform the process steps described herein, hard-wired circuitry may be used in place of, or in combination with, software/firmware instructions for implementation of the processes of the present embodiments. Thus, the present embodiments are not limited to any specific combination of hardware and software.

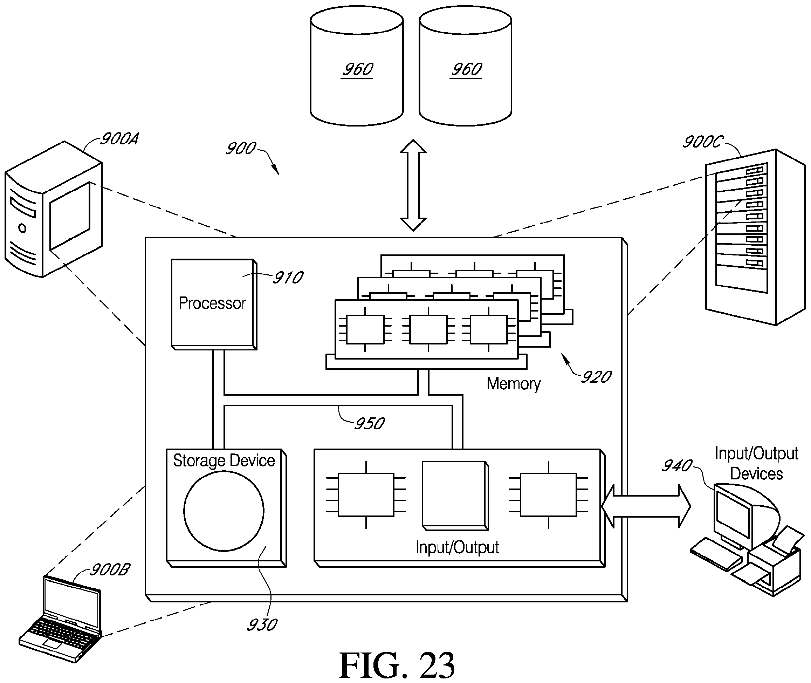

Figure 23 is a functional block diagram of a general-purpose computing system on which the present embodiments may be implemented according to various aspects of the present disclosure. The computer system 900 may be embodied in at least one of a personal computer (also referred to as a desktop computer) 900A, a portable computer (also referred to as a laptop or notebook computer) 900B, and/or a server 900C. A server is a computer program and/or a machine that waits for requests from other machines or software (clients) and responds to them. A server typically processes data. The purpose of a server is to share data and/or hardware and/or software resources among clients. This architecture is called the client-server model. The clients may run on the same computer or may connect to the server over a network. Examples of computing servers include database servers, file servers, mail servers, print servers, web servers, game servers, and application servers. The term server may be construed broadly to include any computerized process that shares a resource to one or more client processes.

The computer system 900 may execute at least some of the operations described above. The computer system 900 may include at least one processor 910, memory 920, at least one storage device 930, and input/output (I/O) devices 940. Some or all of the components 910, 920, 930, 940 may be interconnected via a system bus 950. The processor 910 may be single- or multi-threaded and may have one or more cores. The processor 910 may execute instructions, such as those stored in the memory 920 and/or in the storage device 930. Information may be received and output using one or more I/O devices 940.

The memory 920 may store information, and may be a computer-readable medium, such as volatile or non-volatile memory. The storage device(s) 930 may provide storage for the system 900, and may be a computer-readable medium. In various aspects, the storage device(s) 930 may be a flash memory device, a hard disk device, an optical disk device, a tape device, or any other type of storage device.

The I/O devices 940 may provide input/output operations for the system 900. The I/O devices 940 may include a keyboard, a pointing device, and/or a microphone. The I/O devices 940 may further include a display unit for displaying graphical user interfaces, a speaker, and/or a printer. External data may be stored in one or more accessible external databases 960.

The features of the present embodiments described herein may be implemented in digital electronic circuitry, and/or in computer hardware, firmware, software, and/or in combinations thereof. Features of the present embodiments may be implemented in a computer program product tangibly embodied in an information carrier, such as a machine-readable storage device, and/or in a propagated signal, for execution by a programmable processor. Embodiments of the present method steps may be performed by a programmable processor executing a program of instructions to perform functions of the described implementations by operating on input data and generating output.

The features of the present embodiments described herein may be implemented in one or more computer programs that are executable on a programmable system including at least one programmable processor coupled to receive data and/or instructions from, and to transmit data and/or instructions to, a data storage system, at least one input device, and at least one output device. A computer program may include a set of instructions that may be used, directly or indirectly, in a computer to perform a certain activity or bring about a certain result. A computer program may be written in any form of programming language, including compiled or interpreted languages, and it may be deployed in any form, including as a stand-alone program or as a module, component, subroutine, or other unit suitable for use in a computing environment.

Suitable processors for the execution of a program of instructions may include, for example, both general and special purpose processors, and/or the sole processor or one of multiple processors of any kind of computer. Generally, a processor may receive instructions and/or data from a read only memory (ROM), or a random access memory (RAM), or both. Such a computer may include a processor for executing instructions and one or more memories for storing instructions and/or data.

Generally, a computer may also include, or be operatively coupled to communicate with, one or more mass storage devices for storing data files. Such devices include magnetic disks, such as internal hard disks and/or removable disks, magneto-optical disks, and/or optical disks. Storage devices suitable for tangibly embodying computer program instructions and/or data may include all forms of non-volatile memory, including for example semiconductor memory devices, such as EPROM, EEPROM, and flash memory devices, magnetic disks such as internal hard disks and removable disks, magneto-optical disks, and CD-ROM and DVD-ROM disks. The processor and the memory may be supplemented by, or incorporated in, one or more ASICs (application-specific integrated circuits).

To provide for interaction with a user, the features of the present embodiments may be implemented on a computer having a display device, such as an LCD (liquid crystal display) monitor, for displaying information to the user. The computer may further include a keyboard, a pointing device, such as a mouse or a trackball, and/or a touchscreen by which the user may provide input to the computer.

The features of the present embodiments may be implemented in a computer system that includes a back-end component, such as a data server, and/or that includes a middleware component, such as an application server or an Internet server, and/or that includes a front-end component, such as a client computer having a graphical user interface (GUI) and/or an Internet browser, or any combination of these. The components of the system may be connected by any form or medium of digital data communication, such as a communication network. Examples of communication networks may include, for example, a LAN (local area network), a WAN (wide area network), and/or the computers and networks forming the Internet.

The computer system may include clients and servers. A client and server may be remote from each other and interact through a network, such as those described herein. The relationship of client and server may arise by virtue of computer programs running on the respective computers and having a client-server relationship to each other.

The above description presents the best mode contemplated for carrying out the present embodiments, and of the manner and process of practicing them, in such full, clear, concise, and exact terms as to enable any person skilled in the art to which they pertain to practice these embodiments. The present embodiments are, however, susceptible to modifications and alternate constructions from those discussed above within the scope of the accompanying claims. Consequently, the present invention is not limited to the particular embodiments disclosed. On the contrary, the present invention covers all modifications and alternate constructions coming within the scope of the accompanying claims. For example, the steps in the processes described herein need not be performed in the same order as they have been presented, and may be performed in any order(s). Further, steps that have been presented as being performed separately may in alternative embodiments be performed concurrently. Likewise, steps that have been presented as being performed concurrently may in alternative embodiments be performed separately.

## Claims

1. An audio/video recording and communication doorbell (500), comprising:
a housing (502);
a button (504) for actuating the doorbell, the button being located at a front of the housing and being configured to move between a first, static position and a second, depressed position;
a video camera (506) located directly behind the button, the video camera being configured for capturing a set of video images to be streamed to a client device, and for detection of infrared (IR) light, wherein the button comprises an optically transparent or translucent material such that ambient light may pass through the button to reach the video camera behind the button; and
IR light-emitting components (513) for activation in low level ambient light, the IR light-emitting components located behind the button.

2. The doorbell of Claim 1, wherein the housing includes an aperture (503) that exposes the button.

3. The doorbell of Claim 2, wherein the button protrudes from the housing through the aperture.

4. The doorbell of Claim 1, wherein actuating the doorbell comprises at least one of sounding an audible tone, initiating recording of audio and/or video, and transmitting audio and/or video.

5. The doorbell of Claim 1, wherein the video camera is located concentrically with the button.

6. The doorbell of Claim 1, wherein the video camera starts capturing video images when the button moves from the first position to the second position.

7. The doorbell of Claim 1, comprising a passive infrared (PIR) sensor assembly (179) comprising a plurality of PIR sensors (144), each respectively having a field of view,
wherein the doorbell is configured to determine a direction that an object is moving, based upon which of the fields of view are triggered in a time sequence.

8. The doorbell of Claim 1, wherein the video camera (506) comprises an IR cut filter (167) to enable the video camera (506) to detect the IR light.

9. The doorbell of Claim 8, wherein the IR cut filter (167) is configured to be activated in low level ambient light.

## Patentansprüche

1. Türklingel zur Audio/Video-Aufnahme und Kommunikation (500), die Folgendes umfasst:
ein Gehäuse (502);
einen Knopf (504) zum Betätigen der Türklingel, wobei sich der Knopf an einer Vorderseite des Gehäuses befindet und so konfiguriert ist, dass er sich zwischen einer ersten, statischen Position und einer zweiten, niedergedrückten Position bewegt;
eine Videokamera (506), die sich direkt hinter dem Knopf befindet, wobei die Videokamera so konfiguriert ist, dass sie eine Reihe von Videobildern erfasst, die an ein Client-Gerät gestreamt werden, und ein Infrarotlicht (IR) erkennt, wobei der Knopf ein optisch transparentes oder durchscheinendes Material umfasst, damit Umgebungslicht durch den Knopf passieren kann, um die Videokamera hinter dem Knopf zu erreichen; und
IR-Licht emittierende Komponenten (513) zum Aktivieren bei geringem Umgebungslicht, wobei die IR-Licht emittierenden Komponenten sich hinter dem Knopf befinden.

2. Türklingel nach Anspruch 1, wobei das Gehäuse eine Öffnung (503) umfasst, die den Knopf freilegt.

3. Türklingel nach Anspruch 2, wobei der Knopf sich vom Gehäuse durch die Öffnung erstreckt.

4. Türklingel nach Anspruch 1, wobei das Betätigen der Türklingel mindestens eins von einem Erklingen eines hörbaren Tons, einem Initiieren einer Audio- und/oder Videoaufnahme und einem Audio- und/oder Videoübertragen umfasst.

5. Türklingel nach Anspruch 1, wobei die Videokamera sich konzentrisch in Bezug zu dem Knopf befindet.

6. Türklingel nach Anspruch 1, wobei die Videokamera beginnt, Videobilder zu erfassen, wenn der Knopf sich von der ersten Position in die zweite Position bewegt.

7. Türklingel nach Anspruch 1, die eine passive Infrarotsensoranordnung (PIR-Anordnung) (179) umfasst, die eine Vielzahl von PIR-Sensoren (144) umfasst, die jeweils ein Sichtfeld aufweisen,
wobei die Türklingel so konfiguriert ist, dass sie eine Richtung bestimmt, in der sich ein Objekt bewegt, basierend darauf, welches der Sichtfelder in einer Zeitfolge ausgelöst wird.

8. Türklingel nach Anspruch 1, wobei die Videokamera (506) einen IR-Cut-Filter (167) umfasst, um der Videokamera (506) das Erkennen des IR-Lichts zu ermöglichen.

9. Türklingel nach Anspruch 8, wobei der IR-Cut-Filter (167) so konfiguriert ist, dass er bei geringem Umgebungslicht aktiviert wird.

## Revendications

1. Sonnette à enregistrement et communication audio/vidéo (500), comprenant :
un boîtier (502) ;
un bouton (504) pour actionner la sonnette, le bouton étant situé à l'avant du boîtier et étant configuré pour se déplacer entre une première position statique et une seconde position enfoncée ;
une caméra vidéo (506) située directement à l'arrière du bouton, la caméra vidéo étant configurée pour capturer un ensemble d'images vidéo devant être transmis en continu à un dispositif client, et pour la détection de lumière infrarouge (IR), dans laquelle le bouton comprend un matériau optiquement transparent ou translucide tel que la lumière ambiante peut passer à travers le bouton pour atteindre la caméra vidéo à l'arrière du bouton ; et
des composants électroluminescents IR (513) destinés à être activés à un faible niveau de lumière ambiante, les composants électroluminescents IR étant situés à l'arrière du bouton ?

2. Sonnette selon la revendication 1, dans laquelle le boîtier comprend une ouverture (503) qui expose le bouton.

3. Sonnette selon la revendication 2, dans laquelle le bouton fait saillie du boîtier à travers l'ouverture.

4. Sonnette selon la revendication 1, dans laquelle l'actionnement de la sonnette comprend au moins l'un de l'émission d'un son audible, du lancement d'un enregistrement audio et/ou vidéo et de la transmission de l'enregistrement audio et/ou vidéo.

5. Sonnette selon la revendication 1, dans laquelle la caméra vidéo est située de manière concentrique avec le bouton.

6. Sonnette selon la revendication 1, dans laquelle la caméra vidéo commence à capturer des images vidéo lorsque le bouton se déplace de la première position à la seconde position.

7. Sonnette selon la revendication 1, comprenant un ensemble capteur infrarouge passif (PIR) (179) comprenant une pluralité de capteurs PIR (144), chacun ayant respectivement un champ de vision,
dans laquelle la sonnette est configurée pour déterminer une direction dans laquelle un objet se déplace, sur la base de ceux des champs de vision qui sont déclenchés dans une séquence temporelle.

8. Sonnette selon la revendication 1, dans laquelle la caméra vidéo (506) comprend un filtre anti-IR (167) pour permettre à la caméra vidéo (506) de détecter la lumière IR.

9. Sonnette selon la revendication 8, dans laquelle le filtre anti-IR (167) est configuré pour être activé à un faible niveau de lumière ambiante.
